# EUROPEAN PATENT APPLICATION

(11) **EP 4 087 164 A1**
(43) Date of publication of application: **09.11.2022**
(21) Application number: 20908767.5
(22) Date of filing: 15.06.2020
(51) Int. Cl.: H04J 14/02

(54) **SERVICE CODE STREAM PROCESSING APPARATUS AND METHOD**

(30) Priority: 31.12.2019 CN 201911419972
(71) Applicant: ZTE Corporation, Shenzhen, Guangdong 518057 (CN)
(72) Inventor: SUN, Yujie, Shenzhen, Guangdong 518057 (CN); YUAN, Yan, Shenzhen, Guangdong 518057 (CN); ZHANG, Yuanbin, Shenzhen, Guangdong 518057 (CN); YOU, Yong, Shenzhen, Guangdong 518057 (CN)
(74) Representative: Pennacchio, Salvatore Giovanni
(86) International application number: PCT/CN2020/096205
(87) International publication number: WO 2021/135087

(57) **Abstract**

The present invention provides a service code stream processing apparatus and method. The service code stream processing apparatus includes: a first service code stream input unit, configured to input a first service code stream; a first service code stream processing unit, configured to process the first service code stream according to first state information of the first service code stream to obtain a second service code stream; and a first service code stream output unit, configured to output the second service code stream. The present invention solves the problem in the related art of an increase in the service interruption time between a wavelength division multiplexing device and a user service device caused by a Clock Data Recovery (CDR) loss of lock on the user service device due to a service failure of the interconnected wavelength division multiplexing device, so as to effectively improve the stability of service transmission between the wavelength division multiplexing device and the user service device.

## Description

### Technical Field

The present invention relates to the field of communications, and in particular to a service code stream processing apparatus and method.

### Background

In an optical transmission scenario where a wavelength division multiplexing device connects to a user service device (for example, a routing device) for service transmission, when a service of the wavelength division multiplexing device fails, long consecutive 0s or long consecutive 1s will appear in a binary service code stream sent from a sending end of the wavelength division multiplexing device to the user service device. After the user service device receives the service code stream with long consecutive 0s or long consecutive 1s, a Clock Data Recovery module (CDR) loss of lock is highly likely to occur.

When the CDR loss of lock occurs on the user service device, it takes a long time for the CDR to recover from the loss of lock, and the user service device cannot receive a service code stream during the CDR loss of lock, therefore, the CDR loss of lock on the user service device will cause that the wavelength division multiplexing device and the user service device cannot recover service transmission directly, even if the wavelength division multiplexing device may be able to recover in a very short time after the service failure. For example, when the wavelength division multiplexing device connects to the routing device, protection switching occurs on the wavelength division multiplexing device, which will interrupt an Optical Channel Data Unit (ODUk) service on the sending side of the wavelength division multiplexing device for 50ms. In the period of service interruption, long consecutive 0s or long consecutive 1s occur in the binary service code stream sent to the user service device, as a result, CDR loss of lock occurs on the routing device, and the service of the routing device is interrupted for 500ms. Therefore, the CDR loss of lock causes a great increase in the time from service interruption to recovery between the wavelength division multiplexing device and the routing device.

In order to avoid the occurrence of the CDR loss of lock on the user service device, the service code stream in a transmission link is usually scrambled or encoded in the related technologies, so as to avoid long consecutive 0s or long consecutive 1s in the service code stream. At present, the processing of the service code stream in the related technologies is mainly based on an alarm mechanism, that is, a mechanism in which the wavelength division multiplexing device is detected and failure of the service of the wavelength division multiplexing device is alarmed to trigger the insertion of a maintenance signal. However, this mechanism cannot completely avoid the CDR loss of lock on the user service device, which further results in long service interruption between the wavelength division multiplexing device and the user service device.

For the problem in the related technologies of service interruption between a wavelength division multiplexing device and a user service device caused by a CDR loss of lock on the user service device, no effective solution has been proposed in the related technologies.

### Summary

Embodiments of the present invention provide a service code stream processing apparatus and method, which can at least solve the problem in the related technologies of an increase in the service interruption time between a wavelength division multiplexing device and a user service device caused by a CDR loss of lock on the user service device due to a service failure of the interconnected wavelength division multiplexing device.

According to an embodiment of the present invention, a service code stream processing apparatus is provided, which includes: a first service code stream input unit, configured to input a first service code stream; a first service code stream processing unit, configured to process the first service code stream according to first state information of the first service code stream to obtain a second service code stream; and a first service code stream output unit, configured to output the second service code stream.

According to another embodiment of the present invention, a service code stream processing method is also provided, which includes that: a first service code stream is obtained; the first service code stream is processed according to first state information of the first service code stream to obtain a second service code stream; and the second service code stream is output.

According to another embodiment of the present invention, a service code stream processing apparatus is also provided, which includes:
a first obtaining module, configured to obtain a first service code stream; and a first output module, configured to process the first service code stream according to first state information of the first service code stream to obtain a second service code stream, and output the second service code stream.

According to an embodiment of the present invention, a service code stream processing apparatus is provided, which includes: a second service code stream input unit, configured to input a fourth service code stream; a second service code stream processing unit, configured to extract a fifth service code stream from the fourth service code stream, and process the fifth service code stream according to second state information of the fifth service code stream; and a second service code stream output unit, configured to output the processed fifth service code stream.

According to another embodiment of the present invention, a service code stream processing method is also provided, which includes that: a fourth service code stream is obtained, and a fifth service code stream is extracted from the fourth service code stream; and the fifth service code stream is processed according to second state information of the fifth service code stream, and the processed fifth service code stream is output.

According to another embodiment of the present invention, a service code stream processing apparatus is also provided, which includes: a second obtaining module, configured to obtain a fourth service code stream, and extract a fifth service code stream from the fourth service code stream; and a second output module, configured to process the fifth service code stream according to second state information of the fifth service code stream, and output the processed fifth service code stream.

According to another embodiment of the present invention, a computer-readable storage medium is also provided, in which a computer program is stored. The computer program is configured to execute, when running, the operations in any above method embodiment.

According to another embodiment of the present invention, an electronic device is also provided, which includes a memory and a processor. The memory stores a computer program. The processor is configured to run the computer program to execute the operations in any above method embodiment.

By means of the embodiments of the present invention, a first service code stream is input through a first service code stream input unit, the first service code stream is processed through a service code stream processing unit according to first state information of the first service code stream to obtain a second service code stream, and the second service code stream is output through a second service code stream output unit. Therefore, the embodiments of the present invention can solve the problem in the related technologies of an increase in the service interruption time between a wavelength division multiplexing device and a user service device caused by a CDR loss of lock on the user service device due to a service failure of the interconnected wavelength division multiplexing device, so as to effectively improve the stability of service transmission between the wavelength division multiplexing device and the user service device.

### Brief Description of the Drawings

The accompanying drawings described here are used for providing further understanding of the embodiments of the present invention, and constitute a part of the present invention. Schematic embodiments of the present invention and description thereof are used for illustrating the present invention and not intended to form an improper limit to the present invention. In the accompanying drawings:
Fig. 1 is a first functional schematic diagram of a service code stream processing apparatus provided by an embodiment of the present invention;
Fig. 2 is a first structural schematic diagram of a service code stream processing apparatus provided by an exemplary embodiment of the present invention;
Fig. 3 is a second structural schematic diagram of a service code stream processing apparatus provided by an exemplary embodiment of the present invention;
Fig. 4 is a first flowchart of a service code stream processing method provided by an embodiment of the present invention;
Fig. 5 is a first structural block diagram of a service code stream processing apparatus provided by an embodiment of the present invention;
Fig. 6 is a second functional schematic diagram of a service code stream processing unit provided by an embodiment of the present invention;
Fig. 7 is a third structural schematic diagram of a service code stream processing apparatus provided by an exemplary embodiment of the present invention;
Fig. 8 is a second flowchart of a service code stream processing method provided by an embodiment of the present invention; and
Fig. 9 is a second structural block diagram of a service code stream processing apparatus provided by an embodiment of the present invention.

### Detailed Description of the Embodiments

The present invention is elaborated below with reference to the accompanying drawings and embodiments. It is to be noted that the embodiments in the present application and characteristics in the embodiments may be combined without conflicts.

It is to be noted that the terms like "first" and "second" in the specification, claims and accompanying drawings of the present invention may be used for differentiating similar objects, and are not always used to describe a specific order or a sequence.

In order to further illustrate the application scenarios of a service code stream processing apparatus and method in the related technologies, service transmission and an alarm detection mechanism between a wavelength division multiplexing device and a user service device are further described below.

A scenario where a wavelength division multiplexing device and a routing device are connected is taken as an example. When the wavelength division multiplexing device is connected to the routing device, an ODUk service at the sending side of the wavelength division multiplexing device fails and an ODUk Loss Of Frame (LOF) alarm signal is generated, and then a corresponding ODUk service demapping unit inserts a Local Fault (LF) maintenance signal to the user service device according to the LOF alarm signal. However, there are two stages in the process of ODUk service failure, namely an Out Of Frame (OOF) stage and an LOF stage. In the OOF stage, the service already fails actually, but the ODUk service demapping unit does not insert LF to the user service device because the ODUk does not acknowledge the LOF alarm signal. In this case, the service code stream output by an ODUk demapping module may have long consecutive 0s or long consecutive 1s.

### Embodiment 1

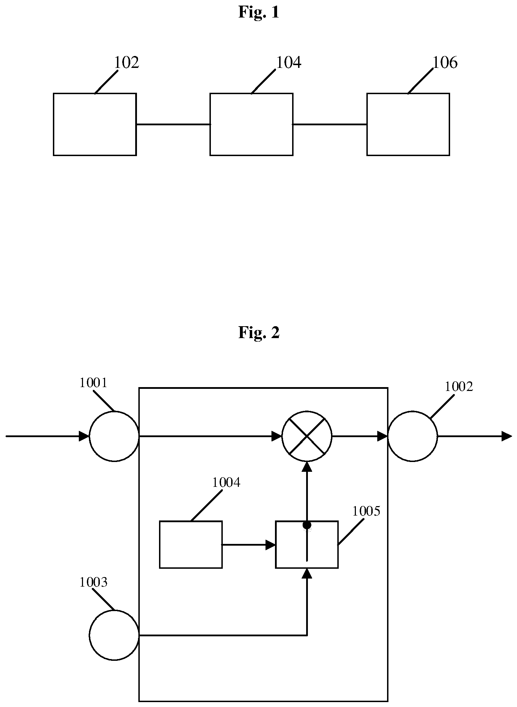

The present embodiment provides a service code stream processing apparatus. Fig. 1 is a first functional schematic diagram of a service code stream processing apparatus provided by an embodiment of the present invention. As shown in Fig. 1, the service code stream processing apparatus in the present embodiment includes a first service code stream input unit 102, a first service code stream processing unit 104 and a first service code stream output unit 106.

The first service code stream input unit 102 is configured to input a first service code stream.

The first service code stream processing unit 104 is configured to process the first service code stream according to first state information of the first service code stream to obtain a second service code stream.

The first service code stream output unit 106 is configured to output the second service code stream.

It is to be further noted that the first service code stream processing apparatus in the present embodiment is provided at the sending side of the wavelength division multiplexing device, that is, on an original service processing path. The first service code stream input unit and the first service code stream output unit in the present embodiment may be physical devices or virtual devices, that is, the first service code stream input unit and the first service code stream output unit may be composed of two different service transmission positions in the original service processing path on the sending side of the wavelength division multiplexing device, which is not limited in the present invention. In an exemplary embodiment, the first service code stream may be a service-layer service code stream of a user service code stream sent by the wavelength division multiplexing device, for example, ODUk, that is, the first service code stream input unit is configured to input the first service code stream sent by the wavelength division multiplexing device. The second service code stream may be a user service code stream needing to be sent to the user service device by the wavelength division multiplexing device, that is, the first service code stream output unit is configured to output the second service code stream to the user service device.

It is to be further noted that the first service code stream in the present embodiment is a service-layer service code stream of a user service code stream, for example, an ODUk service code stream. In the above embodiment, the first state information of the first service code stream is used for indicating a state of the first service code stream. The first state information may be state information for indicating a state of the first service code stream, and the state information is sent to the service code stream processing unit by a related detection unit in the wavelength division multiplexing device, for example, by an ODUk service alarm detection function unit in the sending side of the wavelength division multiplexing device.

By means of the service code stream processing apparatus in the present embodiment, a first service code stream is input through a first service code stream input unit, the first service code stream is processed through a service code stream processing unit according to first state information of the first service code stream to obtain a second service code stream, and the second service code stream is output through a second service code stream output unit. Therefore, the service code stream processing apparatus in the present embodiment can solve the problem in the related technologies of an increase in the service interruption time between a wavelength division multiplexing device and a user service device caused by a CDR loss of lock on the user service device due to a service failure of the interconnected wavelength division multiplexing device, so as to effectively improve the stability of service transmission between the wavelength division multiplexing device and the user service device.

In an exemplary embodiment, the first service code stream processing unit 104 is further configured to:
determine an alarm logic according to the first state information, and process the first service code stream according to the alarm logic to obtain a second service code stream.

The alarm logic includes one of the following: a first alarm logic, a second alarm logic or a third alarm logic.

The first alarm logic is used for indicating that the first service code stream is in an abnormal state and no maintenance signal is inserted in the first service code stream. The second alarm logic is used for indicating that the first service code stream is in an abnormal state and a maintenance signal has been inserted in the first service code stream. The third alarm logic is used for indicating that the first service code stream is in a normal state.

In an exemplary embodiment, the first state information may include at least one of the following: an OOF alarm signal and an LOF alarm signal.

The first alarm logic includes that the OOF alarm signal is valid, and the LOF alarm signal is invalid. The second alarm logic includes that the OOF alarm signal is valid, and the LOF alarm signal is valid. The third alarm logic includes that the OOF alarm signal is invalid, and the LOF alarm signal is invalid.

In an exemplary embodiment, the OOF alarm signal is an ODUk OOF alarm signal, and similarly, the LOF alarm signal is an ODUk LOF alarm signal.

In an exemplary embodiment, the first service code stream processing unit 104 is further configured to:
in a case where the alarm logic is the first alarm logic, extract a third service code stream from the first service code stream, and modify the third service code stream to obtain the second service code stream; and
output the second service code stream.

It is to be further noted that in a case where the alarm logic is the first alarm logic, the third service code stream extracted from the first service code stream needs to be modified. Here, the third service code stream is extracted from the first service code stream of a service layer and is to be sent to the user service device, for example, the third service code stream is a service code stream obtained by performing demapping from the ODUk service code stream. In the above exemplary embodiment, the third service code stream is modified to avoid long consecutive 0s or long consecutive 1s in the third service code stream, so as to obtain and output the second service code stream.

In an exemplary embodiment, the first service code stream processing unit is further configured to:
use a scrambling polynomial to scramble the third service code stream; or,
use a maintenance signal to replace the third service code stream; or,
encode the third service code stream to modify at least part of bits in a third data stream.

It is to be further noted that in the processing of the third service code stream, the third service code stream may be scrambled by using the scrambling polynomial to obtain the second service code stream; or the third service code stream may be replaced using the maintenance signal, that is, the third service code stream is completely replaced by the maintenance signal to obtain the second service code stream; or the third service code stream is encoded to modify part of the bits in the third service code stream, for example, modify the bits corresponding to the long consecutive 0s or long consecutive 1s in the third service code stream. The operation of modifying the third service code stream is further illustrated below by means of exemplary embodiments.

In an exemplary embodiment, the maintenance signal includes one of the following:
a Pseudo Random Binary Sequence (PRBS) code stream, a code stream with alternate 0s and 1s, an error block code stream, or an LF code stream.

In an exemplary embodiment, the first service code stream processing unit is further configured to:
encode the third service code stream according to the PRBS code stream or the code stream with alternate 0s and 1s.

In an exemplary embodiment, the first service code stream processing unit is further configured to:
in a case where the alarm logic is the second alarm logic, take the maintenance signal, for example, LF, as the second service code stream; and
output the second service code stream.

In an exemplary embodiment, the first service code stream processing unit is further configured to:
in a case where the alarm logic is the third alarm logic, extract a third service code stream from the first service code stream, and determine the third service code stream as the second service code stream; and
output the second service code stream.

It is to be further noted that in a case where the alarm logic is the third alarm logic, i.e., a logical state combination of the first state information indicates that the first service code stream is in a normal state, the first service code stream may be extracted directly to obtain the third service code stream, and the third service code stream may be output as the second service code stream.

The service code stream processing apparatus in the present embodiment is further illustrated below through several exemplary embodiments.

### Exemplary embodiment 1

In the present exemplary embodiment, the service code stream processing apparatus is provided at the wavelength division multiplexing device, specifically on a user service processing path following an ODUk demapping function module on the sending side of the wavelength division multiplexing device, and is a new device on the original service path. Fig. 2 is a first structural schematic diagram of a service code stream processing apparatus provided by an exemplary embodiment of the present invention. As shown in Fig. 2, the service code stream processing apparatus in the present exemplary embodiment includes: a service code stream input port 1001, a service code stream output port 1002, a control port 1003, a PRBS generating unit 1004 and a switch unit 1005.

A binary service code stream output by ODUk demapping is input from the service code stream input port 1001 of the apparatus and output from the service code stream output unit 1002. Control signals input by the control port 1003 are from a service alarm module of ODUk, wherein the control signals specifically include the OOF alarm signal and the LOF alarm signal.

An input state of the control port 1003 determines whether the apparatus transparently forwards or scrambles the input binary service code stream. A state instruction input by the control port 1003 may be specifically an instruction obtained by reversing the LOF alarm signal and performing logical AND processing to the reversed LOF alarm signal and the OOF alarm signal. Specifically, if the control port 1003 receives the OOF alarm signal but does not receive the LOF alarm signal, the input of the control port 1003 is logical "1", in this case, the switch of the switch unit 1005 is on, the binary service code stream input by the service code stream input unit 1001 is scrambled through a PRBS code generated by the PRBS generating unit 1004, and the scrambled service code stream is output from the service code stream output unit 1002.

Correspondingly, if the control port 1003 does not receive the OOF alarm signal, or has received the OOF alarm signal and the LOF alarm signal, the input of the control port 1003 is logical "0", in this case, the switch of the switch unit 1005 is off, the binary service code stream input by the service code stream input unit 1001 is directly and transparently forwarded to the service code stream output unit 1002 for output.

### Exemplary embodiment 2

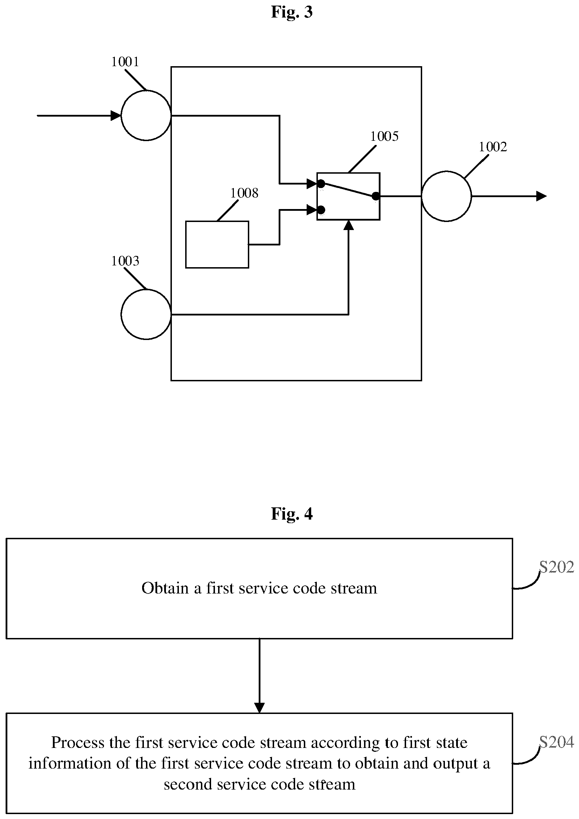

In the present exemplary embodiment, the service code stream processing apparatus is provided at the wavelength division multiplexing device, specifically on a user service processing path following an ODUk demapping function module on the sending side of the wavelength division multiplexing device, and is a new device on the original service path. Fig. 3 is a second structural schematic diagram of a service code stream processing apparatus provided by an exemplary embodiment of the present invention. As shown in Fig. 3, the service code stream processing apparatus in the present exemplary embodiment includes: a service code stream input port 1001, a service code stream output port 1002, a control port 1003, a switch unit 1005 and an alternate 0s and 1s coding unit 1008.

The binary service code stream output by ODUk demapping is input from the service code stream input unit 1001 of the apparatus and output from the service code stream output unit 1002. The control signal input by the control port 1003 is from any service alarm or a logical combination of alarms, such as the OOF alarm signal, that will cause the long consecutive 0s or long consecutive 1s in the service code stream without any the maintenance signal being inserted. The input state of the control port 1003 determines whether the apparatus transparently forwards the input binary service code stream or uses the code stream with alternate 0s and 1s generated by the alternate 0s and 1s coding unit 1008 to replace the input binary service code stream for output. Specifically, when receiving a valid service alarm, the control port 1003 controls the switch unit 1005 to use the code stream with alternate 0s and 1s generated by the alternate 0s and 1s coding unit 1008 to replace the input binary service code stream for output. When the control port 1003 does not receive the service alarm, or the received service alarm is invalid, the control port 1003 controls the switch unit 1005, so that the binary service code stream input by the service code stream input unit 1001 is directly and transparently forwarded to the service code stream output unit 1002 for output.

Moreover, the alternate 0s and 1s coding unit 1008 in the present exemplary embodiment may also be replaced by the PRBS generating unit.

### Embodiment 2

The present embodiment provides a service code stream processing method. Fig. 4 is a first flowchart of a service code stream processing method provided by an embodiment of the present invention. As shown in Fig. 4, the service code stream processing method in the present embodiment includes the following operations.

At S202, a first service code stream is obtained.

At S204, the first service code stream is processed according to first state information of the first service code stream to obtain a second service code stream, and the second service code stream is output.

It is to be further noted that other exemplary embodiments and implementations of the service code stream processing method recorded in the present embodiment correspond to the service code stream processing apparatus in the above embodiment 1, so they will not be described here.

In an exemplary embodiment, the operation that the first service code stream is processed according to the first state information of the first service code stream to obtain the second service code stream may include that:
an alarm logic is determined according to the first state information, and the first service code stream is processed according to the alarm logic to obtain the second service code stream.

The alarm logic includes one of the following: a first alarm logic, a second alarm logic or a third alarm logic.

The first alarm logic is used for indicating that the first service code stream is in an abnormal state and no maintenance signal is inserted in the first service code stream. The second alarm logic is used for indicating that the first service code stream is in an abnormal state and a maintenance signal has been inserted in the first service code stream. The third alarm logic is used for indicating that the first service code stream is in a normal state.

In an exemplary embodiment, the operation that the first service code stream is processed according to the alarm logic to obtain the second service code stream may include that:
in a case where the alarm logic is the first alarm logic, a third service code stream is extracted from the first service code stream, and the third service code stream is modified to obtain the second service code stream; and
the second service code stream is output.

In an exemplary embodiment, the operation that the third service code stream is modified to obtain the second service code stream may include that:
the third service code stream is scrambled using a scrambling polynomial; or,
the third service code stream is replaced using a maintenance signal; or,
the third service code stream is encoded to modify at least part of bits in the third data stream.

In an exemplary embodiment, the maintenance signal includes one of the following:
a PRBS code stream, a code stream with alternate 0s and 1s, an error block code stream, or an LF code stream.

In an exemplary embodiment, the operation that the third service code stream is encoded may include that:
the third service code stream is encoded according to the PRBS code stream or the code stream with alternate 0s and 1s.

In an exemplary embodiment, the operation that the first service code stream is processed according to the alarm logic to obtain the second service code stream may include that:
in a case where the alarm logic is the second alarm logic, the maintenance signal, for example, LF, is taken as the second service code stream; and
the second service code stream is output.

In an exemplary embodiment, the operation that the first service code stream is processed according to the alarm logic to obtain the second service code stream may include that:
in a case where the alarm logic is the third alarm logic, the third service code stream is extracted from the first service code stream, and the third service code stream is determined as the second service code stream; and
the second service code stream is output.

Through the above description of implementations, those skilled in the art may clearly know that the method according to the above embodiments may be implemented by means of software plus a necessary common hardware platform, certainly by means of hardware; but in many cases, the former is the better implementation. Based on this understanding, the technical solution of the present invention substantially or the part making a contribution to the prior art can be embodied in the form of software product; the computer software product is stored in a storage medium (for example, a Read-Only Memory (ROM)/Random Access Memory (RAM), a magnetic disk, and a compact disc) and includes a number of instructions to make a terminal device (which can be a cell phone, a personal computer, a server or a network device, etc.) perform all or part of the method in each embodiment of the present invention.

### Embodiment 3

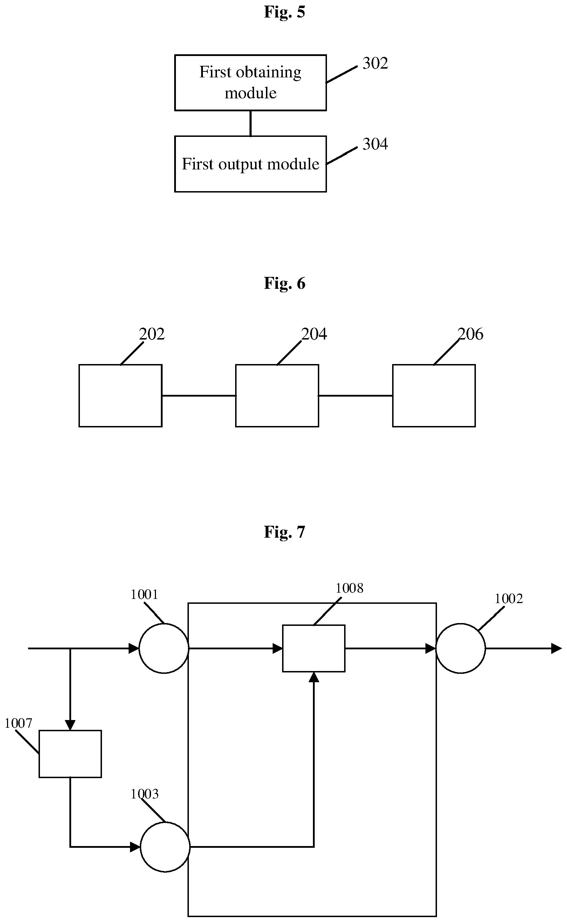

The present embodiment provides a service code stream processing apparatus, which is configured to implement the above embodiments and exemplary implementations. The embodiments which have been elaborated will not be repeated here. The term "module" used below can realize a combination of software and/or hardware with an intended function. Although the device described in the following embodiment is realized through software better, the realization through hardware or a combination of software and hardware is possible and conceived. Fig. 5 is a first structural block diagram of a service code stream processing apparatus provided by an embodiment of the present invention. As shown in Fig. 5, the service code stream processing apparatus in the present embodiment includes a first obtaining module 302 and a first output module 304.

The first obtaining module 302 is configured to obtain the first service code stream.

The first output module 304 is configured to process the first service code stream according to first state information of the first service code stream to obtain and output the second service code stream.

It is to be further noted that other exemplary embodiments and implementations of the service code stream processing apparatus recorded in the present embodiment correspond to the service code stream processing apparatus in the above embodiment 1, so they will not be described here.

In an exemplary embodiment, the operation that the first service code stream is processed according to the first state information of the first service code stream to obtain the second service code stream may include that:
an alarm logic is determined according to the first state information, and the first service code stream is processed according to the alarm logic to obtain the second service code stream.

The alarm logic includes one of the following: a first alarm logic, a second alarm logic or a third alarm logic.

The first alarm logic is used for indicating that the first service code stream is in an abnormal state and no maintenance signal is inserted in the first service code stream. The second alarm logic is used for indicating that the first service code stream is in an abnormal state and a maintenance signal has been inserted in the first service code stream. The third alarm logic is used for indicating that the first service code stream is in a normal state.

In an exemplary embodiment, the operation that the first service code stream is processed according to the alarm logic to obtain the second service code stream may include that:
in a case where the alarm logic is the first alarm logic, a third service code stream is extracted from the first service code stream, and the third service code stream is modified to obtain the second service code stream; and
the second service code stream is output.

In an exemplary embodiment, the operation that the third service code stream is modified to obtain the second service code stream may include that:
the third service code stream is scrambled using a scrambling polynomial; or,
the third service code stream is replaced using a maintenance signal; or,
the third service code stream is encoded to modify at least part of bits in the third data stream.

In an exemplary embodiment, the maintenance signal includes one of the following:
a PRBS code stream, a code stream with alternate 0s and 1s, an error block code stream, or an LF code stream.

In an exemplary embodiment, the operation that the third service code stream is encoded may include that:
the third service code stream is encoded according to the PRBS code stream or the code stream with alternate 0s and 1s.

In an exemplary embodiment, the operation that the first service code stream is processed according to the alarm logic to obtain the second service code stream may include that:
in a case where the alarm logic is the second alarm logic, the user service maintenance signal, for example, LF, is taken as the second service code stream; and
the second service code stream is output.

In an exemplary embodiment, the operation that the first service code stream is processed according to the alarm logic to obtain the second service code stream may include that:
in a case where the alarm logic is the third alarm logic, the third service code stream is extracted from the first service code stream, and the third service code stream is determined as the second service code stream; and
the second service code stream is output.

It is to be noted that, each of the above modules may be realized by software or hardware. For the latter, the each of the above modules may be realized by, but not limited to, the following way: all of the above modules are in the same processor; or, the above modules are respectively in different processors in form of any combination.

### Embodiment 4

The present embodiment provides a service code stream processing apparatus. Fig. 6 is a second functional schematic diagram of a service code stream processing apparatus provided by an embodiment of the present invention. As shown in Fig. 6, the service code stream processing apparatus in the present embodiment includes a second service code stream input unit 402, a second service code stream processing unit 404 and a second service code stream output unit 406.

The second service code stream input unit 402 is configured to input a fourth service code stream.

The second service code stream processing unit 404 is configured to extract a fifth service code stream from the fourth service code stream, and process the fifth service code stream according to second state information of the fifth service code stream.

The second service code stream output unit 406 is configured to output the processed fifth service code stream.

It is to be further noted that the second service code stream processing apparatus in the present embodiment is provided at the sending side of the wavelength division multiplexing device, that is, on an original service processing path. The second service code stream input unit and the first service code stream output unit in the present embodiment may be physical devices or virtual devices, that is, the second service code stream input unit and the first service code stream output unit may be composed of two different service transmission positions in the original service processing path on the sending side of the wavelength division multiplexing device, which is not limited in the present invention. In an exemplary embodiment, the fourth service code stream may be a service-layer service code stream of a user service code stream sent by the wavelength division multiplexing device, that is, the second service code stream input unit is configured to input the fourth service code stream sent by the wavelength division multiplexing device; the fifth service code stream may be a user service code stream needing to be sent to the user service device by the wavelength division multiplexing device, that is, the second service code stream output unit is configured to output the fifth service code stream to the user service device.

It is to be further noted that the fourth service code stream in the present embodiment is used for indicating the service layer of the fifth service code stream, for example, the ODUk service code stream. The fifth service code stream in the present embodiment is used for indicating the user service code stream extracted from the service-layer service code stream, for example, the user service code stream obtained by ODUk demapping. Different from the state of the first service code stream indicated by the first state information in embodiment 1, in the present embodiment, the second state information of the fifth service code stream is used for indicating the state of the fifth service code stream.

By means of the service code stream processing apparatus in the present embodiment, the fourth service code stream is input through the second service code stream input unit, the fifth service code stream is extracted from the fourth service code stream through the second service code stream processing unit, the fifth service code stream is processed according to the second state information of the fifth service code stream, and the processed fifth service code stream is output by the second service code stream output unit. Therefore, the service code stream processing apparatus in the present embodiment can solve the problem in the related technologies of an increase in the service interruption time between a wavelength division multiplexing device and a user service device caused by a CDR loss of lock on the user service device due to a service failure of the interconnected wavelength division multiplexing device, so as to effectively improve the stability of service transmission between the wavelength division multiplexing device and the user service device.

Specifically, by detecting and processing the user service code stream, the service code stream processing apparatus in the above embodiment solves the problem of service interruption between the devices caused by that in the case of a CDR loss of lock on the user service device due to a service failure of the wavelength division multiplexing device, the service of the user service device cannot recover immediately after the service of the wavelength division multiplexing device recovers.

In an exemplary embodiment, the second state information includes at least one of the following:
a length of consecutive 0s, a length of consecutive 1s, and a lock state of a 66b synchronous header.

In an exemplary embodiment, the second service code stream processing unit 404 is further configured to:
determine an alarm logic according to the second state information, and process the fifth service code stream according to the alarm logic.

The alarm logic at least includes one of the following: a fourth alarm logic or a fifth alarm logic.

The fourth alarm logic is used for indicating that the length of consecutive 0s and/or the length of consecutive 1s in the fifth service code stream is greater than or equal to a preset length threshold, or the 66b synchronous header is in a loss of lock; and the fifth alarm logic is used for indicating that the fifth service code stream is in a normal state.

It is to be further noted that in the above exemplary embodiment, the second state information is used for indicating the state of the fifth service code stream. The determination of the second state information may directly detect the fifth service code stream, for example, detect the length of consecutive 0s, the length of consecutive 1s, and the lock state of the 66b synchronous header in the fifth service code stream. The alarm logic in the above embodiment is specifically used for indicating the specific logical state of the second state information or the logical state combination of different second state information. For example, if a certain piece of state information has two different logical states, namely valid and invalid, whether the state information is valid or invalid may be specified through the alarm logic. Through the above alarm logic, whether the fifth service code stream is in an abnormal state may be detected, and the corresponding processing of the fifth service code stream may be detected according to a preset process. For example, through the alarm logic, whether the maintenance signal is inserted in the fifth service code stream when the fifth service code stream is in an abnormal state is detected.

In the above alarm logic, in a case where the alarm logic is the fourth alarm logic, that is, the logical state combination of the second state information indicates that the fifth service code stream is abnormal, specifically, the length of consecutive 0s and/or the length of consecutive 1s in the fifth service code stream is greater than or equal to the preset length threshold, or the 66b synchronous header is in a loss of lock. In the above case, it is needed to modify the fifth service code stream. In a case where the alarm logic is the fifth alarm logic, the logical state combination of the second state information indicates that the fifth service code stream is in a normal state. Therefore, there is no need to process the fifth service code stream.

In an exemplary embodiment, the second service code stream processing unit 404 is further configured to:
in a case where the alarm logic is the fourth alarm logic, modify the fifth service code stream.

In the above exemplary embodiment, the fifth service code stream is modified to avoid long consecutive 0s or long consecutive 1s in the output fifth service code stream.

In an exemplary embodiment, the second service code stream processing unit 404 is further configured to:
use the scrambling polynomial to scramble the fifth service code stream; or,
use the maintenance signal to replace the fifth service code stream; or,
encode the fifth service code stream to modify at least part of bits in the fifth data stream.

It is to be further noted that in the processing of the fifth service code stream, the third service code stream may be scrambled by using the scrambling polynomial; or the fifth service code stream is replaced using the maintenance signal, that is, the fifth service code stream is completely replaced by the maintenance signal; or the fifth service code stream is encoded to modify part of the bits in the fifth service code stream, for example, modify the bits corresponding to the long consecutive 0s or long consecutive 1s in the fifth service code stream. The operation of modifying the fifth service code stream is further illustrated below by means of exemplary embodiments.

In an exemplary embodiment, the maintenance signal includes one of the following:
a PRBS code stream, a code stream with alternate 0s and 1s, an error block code stream, or an LF code stream.

In an exemplary embodiment, the operation that the fifth service code stream is encoded may include that:
the fifth service code stream is encoded according to the PRBS code stream or the code stream with alternate 0s and 1s.

In an exemplary embodiment, the second service code stream processing unit 404 is further configured to:
in a case where the alarm logic is the fifth alarm logic, output the fifth service code stream.

It is to be further noted that in a case where the alarm logic is the fourth alarm logic, a logical state combination of the second state information indicates that the fifth service code stream is in a normal state. In the above case, the fifth service code stream may be directly and transparently forwarded for output.

The service code stream processing apparatus in the present embodiment is further illustrated below through exemplary embodiments.

### Exemplary embodiment 3

In the present exemplary embodiment, the service code stream processing apparatus is provided at the wavelength division multiplexing device, specifically on the user service processing path following the ODUk demapping function module on the sending side of the wavelength division multiplexing device, and is a new device on the original service path. Fig. 7 is a third structural schematic diagram of a service code stream processing apparatus provided by an exemplary embodiment of the present invention. As shown in Fig. 7, the service code stream processing apparatus in the present exemplary embodiment includes: a service code stream input port 1001, a service code stream output port 1002, a control port 1003, a service code stream processing unit 1006 and a long consecutive 0s or 1s alarm detection unit 1007.

The binary service code stream output by ODUk demapping is input from the service code stream input port 1001 of the apparatus, is transparently forwarded by the service code stream processing unit 1006, and is output from the service code stream output unit 1002. The control signals input by the control port 1003 are from the output of the long consecutive 0s or 1s alarm detection unit 1007 in the service code stream.

An alarm output state of the long consecutive 0s or 1s alarm detection unit 1007 determines how the service code stream processing unit 1006 processes the input binary service code stream. Specifically, when the long consecutive 0s or 1s alarm detection unit 1007 detects that the binary user service code stream has long consecutive 0s or long consecutive 1s, the output of the long consecutive 0s or 1s alarm detection unit 1007 is logical "1", in this case, the binary service code stream is processed through the service code stream processing unit 1006, for example, scrambling/encoding and replacing/modifying part of bits in the binary user service code stream, and the processed service code stream is output from the service code stream output unit 1002, so as to avoid the situation where the output service code stream still has long consecutive 0s or long consecutive 1s.

Correspondingly, when the long consecutive 0s or 1s alarm detection unit 1007 does not detect that the binary user service code stream has long consecutive 0s or long consecutive 1s, the output of the long consecutive 0s or 1s alarm detection unit 1007 is logical "0", in this case, the binary service code stream is directly and transparently forwarded to the service code stream output unit 1002 for output.

### Embodiment 5

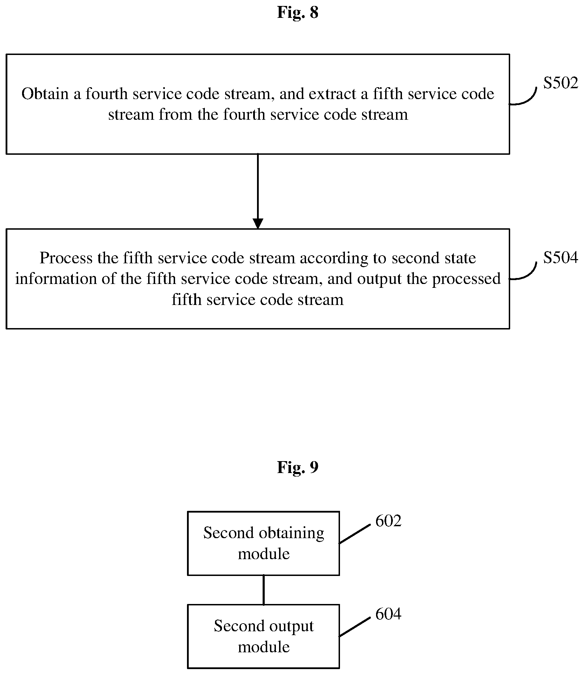

The present embodiment provides a service code stream processing method. Fig. 8 is a second flowchart of a service code stream processing method provided by an embodiment of the present invention. As shown in Fig. 8, the service code stream processing method in the present embodiment includes the following operations.

At S502, a fourth service code stream is obtained, and a fifth service code stream is extracted from the fourth service code stream.

At S504, the fifth service code stream is processed according to second state information of the fifth service code stream, and the processed fifth service code stream is output.

It is to be further noted that other exemplary embodiments and technical effects of the service code stream processing method in the present embodiment correspond to the service code stream processing apparatus recorded in the above embodiment 4, so they will not be described here.

In an exemplary embodiment, the second state information includes at least one of the following:
a length of consecutive 0s, a length of consecutive 1s, and a lock state of a 66b synchronous header.

In an exemplary embodiment, the operation that the fifth service code stream is processed according to the second state information of the fifth service code stream may include that:
the alarm logic is determined according to the second state information, and the fifth service code stream is processed according to the alarm logic.

The alarm logic at least includes one of the following: a fourth alarm logic or a fifth alarm logic.

The fourth alarm logic is used for indicating that the length of consecutive 0s and/or the length of consecutive 1s in the fifth service code stream is greater than or equal to the preset length threshold, or the 66b synchronous header is in a loss of lock. The fifth alarm logic is used for indicating that the fifth service code stream is in a normal state.

In an exemplary embodiment, the operation that the fifth service code stream is processed according to the alarm logic may include that:
in a case where the alarm logic is the fourth alarm logic, the fifth service code stream is modified.

In an exemplary embodiment, the operation that the fifth service code stream is modified may include that:
the fifth service code stream is scrambled using the scrambling polynomial; or,
the fifth service code stream is replaced using the maintenance signal; or,
the fifth service code stream is encoded to modify at least part of the bits in the fifth data stream.

In an exemplary embodiment, the maintenance signal includes one of the following:
a PRBS code stream, a code stream with alternate 0s and 1s, an error block code stream, or an LF code stream.

In an exemplary embodiment, the operation that the fifth service code stream is encoded may include that:
the fifth service code stream is encoded according to the PRBS code stream or the code stream with alternate 0s and 1s.

In an exemplary embodiment, the operation that the fifth service code stream is processed according to the alarm logic may include that:
in a case where the alarm logic is the fifth alarm logic, the fifth service code stream is output.

Through the above description of implementations, those skilled in the art may clearly know that the method according to the above embodiments may be implemented by means of software plus a necessary common hardware platform, certainly by means of hardware; but in many cases, the former is the better implementation. Based on this understanding, the technical solution of the present invention substantially or the part making a contribution to the prior art can be embodied in the form of software product; the computer software product is stored in a storage medium (for example, an ROM/RAM, a magnetic disk, and a compact disc) and includes a number of instructions to make a terminal device (which can be a cell phone, a personal computer, a server or a network device, etc.) perform all or part of the method in each embodiment of the present invention.

### Embodiment 6

The present embodiment provides a service code stream processing apparatus, which is configured to implement the above embodiments and exemplary implementations. The embodiments which have been elaborated will not be repeated here. The term "module" used below can realize a combination of software and/or hardware with an intended function. Although the device described in the following embodiment is realized through software better, the realization through hardware or a combination of software and hardware is possible and conceived. Fig. 9 is a second structural block diagram of a service code stream processing apparatus provided by an embodiment of the present invention. As shown in Fig. 9, the service code stream processing apparatus in the present embodiment includes a second obtaining module 602 and a second output module 604.

The second obtaining module 602 is configured to obtain a fourth service code stream, and extract a fifth service code stream from the fourth service code stream.

The second output module 604 is configured to process the fifth service code stream according to second state information of the fifth service code stream, and output the processed fifth service code stream.

It is to be further noted that other exemplary embodiments and technical effects of the service code stream processing apparatus in the present embodiment correspond to the service code stream processing apparatus recorded in the above embodiment 4, so they will not be described here.

In an exemplary embodiment, the second state information includes at least one of the following:
a length of consecutive 0s, a length of consecutive 1s, and a lock state of a 66b synchronous header.

In an exemplary embodiment, the operation that the fifth service code stream is processed according to the second state information of the fifth service code stream may include that:
the alarm logic is determined according to the second state information, and the fifth service code stream is processed according to the alarm logic.

The alarm logic at least includes one of the following: a fourth alarm logic or a fifth alarm logic.

The fourth alarm logic is used for indicating that the length of consecutive 0s and/or the length of consecutive 1s in the fifth service code stream is greater than or equal to the preset length threshold, or the 66b synchronous header is in a loss of lock. The fifth alarm logic is used for indicating that the fifth service code stream is in a normal state.

In an exemplary embodiment, the operation that the fifth service code stream is processed according to the alarm logic may include that:
in a case where the alarm logic is the fourth alarm logic, the fifth service code stream is modified.

In an exemplary embodiment, the operation that the fifth service code stream is modified may include that:
the fifth service code stream is scrambled using the scrambling polynomial; or,
the fifth service code stream is replaced using the maintenance signal; or,
the fifth service code stream is encoded to modify at least part of bits in the fifth data stream.

In an exemplary embodiment, the maintenance signal includes one of the following:
a PRBS code stream, a code stream with alternate 0s and 1s, an error block code stream, or an LF code stream.

In an exemplary embodiment, the operation that the third service code stream is encoded may include that:
the fifth service code stream is encoded according to the PRBS code stream or the code stream with alternate 0s and 1s.

In an exemplary embodiment, the operation that the fifth service code stream is processed according to the alarm logic may include that:
in a case where the alarm logic is the fifth alarm logic, the fifth service code stream is output.

It is to be noted that, each of the above modules may be realized by software or hardware. For the latter, the each of the above modules may be realized by, but not limited to, the following way: all of the above modules are in the same processor; or, the above modules are respectively in different processors in form of any combination.

### Embodiment 7

An embodiment of the present invention also provides a computer-readable storage medium, in which a computer program is stored. The computer program is configured to perform, when running, the operations in any of the above method embodiments.

As an exemplary implementation of the present embodiment, the computer-readable storage medium may be configured to store a computer program for executing the operations of the methods recorded in the above embodiments.

As an exemplary implementation of the present embodiment, the computer-readable storage media includes, but is not limited to, a USB flash disk, an ROM, an RAM, a mobile hard disk, a magnetic disk, a compact disc, and other media capable of storing the computer program.

### Embodiment 8

An embodiment of the present invention also provides an electronic device, which includes a memory and a processor. The memory stores a computer program. The processor is configured to run the computer program to execute the operations in any above method embodiment.

As an exemplary implementation, the electronic device may also include a transmission device and an input/output device. The transmission device is connected with the processor, and the input/output device is connected with the processor.

As an exemplary implementation of the present embodiment, the processor may be configured to execute, through the computer program, the operations of the methods recorded in the above embodiments.

The specific examples in the present embodiment may refer to the examples described in the above embodiments and exemplary embodiments.

It is apparent that those skilled in the art should appreciate that the above modules and operations of the present invention may be implemented by a general-purpose computing device, and they may be centralized in a single computing device or distributed on a network composed of multiple computing devices; optionally, they may be implemented by a program code which is capable of being executed by the computing device, so that they may be stored in a storage device and executed by the computing device. In some situations, the presented or described operations may be executed in an order different from that described here; or they are made into integrated circuit modules, respectively; or multiple modules and operations of them are made into a single integrated circuit module. Therefore, the present invention is not limited to any particular combination of hardware and software.

The above is only the exemplary embodiments of the present invention and not intended to limit the present invention. For those skilled in the art, the present invention may have various modifications and changes. Any modifications, equivalent replacements, improvements and the like within the principle of the present invention should fall within the protection scope of the claims of the present invention.

### Industrial Applicability

Based on the above technical solutions, a first service code stream is input through a first service code stream input unit, the first service code stream is processed through a service code stream processing unit according to first state information of the first service code stream to obtain a second service code stream, and the second service code stream is output through a second service code stream output unit. Therefore, the embodiments of the present invention can solve the problem in the related technologies of an increase in the service interruption time between a wavelength division multiplexing device and a user service device caused by a CDR loss of lock on the user service device due to a service failure of the interconnected wavelength division multiplexing device, so as to effectively improve the stability of service transmission between the wavelength division multiplexing device and the user service device.

## Claims

1. A service code stream processing apparatus, comprising:
a first service code stream input unit, configured to input a first service code stream;
a first service code stream processing unit, configured to process the first service code stream according to first state information of the first service code stream to obtain a second service code stream; and
a first service code stream output unit, configured to output the second service code stream.

2. The apparatus according to claim 1, wherein the first service code stream processing unit is further configured to:
determine an alarm logic according to the first state information, and process the first service code stream according to the alarm logic to obtain the second service code stream;
wherein the alarm logic comprises one of the following: a first alarm logic, a second alarm logic or a third alarm logic;
the first alarm logic is used for indicating that the first service code stream is in an abnormal state and no maintenance signal is inserted in the first service code stream; the second alarm logic is used for indicating that the first service code stream is in an abnormal state and a maintenance signal has been inserted in the first service code stream; and the third alarm logic is used for indicating that the first service code stream is in a normal state.

3. The apparatus according to claim 2, wherein the first service code stream processing unit is further configured to:
in a case where the alarm logic is the first alarm logic, extract a third service code stream from the first service code stream, and modify the third service code stream to obtain the second service code stream; and
output the second service code stream.

4. The apparatus according to claim 2, wherein the first service code stream processing unit is further configured to:
in a case where the alarm logic is the second alarm logic, determine the second service code stream according to the maintenance signal that has been inserted in the first service code stream; and output the second service code stream.

5. The apparatus according to claim 2, wherein the first service code stream processing unit is further configured to:
in a case where the alarm logic is the third alarm logic, extract a third service code stream from the first service code stream, and determine the third service code stream as the second service code stream; and
output the second service code stream.

6. A service code stream processing method, comprising:
obtaining a first service code stream; and
processing the first service code stream according to first state information of the first service code stream to obtain a second service code stream, and outputting the second service code stream.

7. The method according to claim 6, wherein processing the first service code stream according to the first state information of the first service code stream to obtain the second service code stream comprises:
determining an alarm logic according to the first state information, and processing the first service code stream according to the alarm logic to obtain the second service code stream;
wherein the alarm logic comprises one of the following: a first alarm logic, a second alarm logic or a third alarm logic;
the first alarm logic is used for indicating that the first service code stream is in an abnormal state and no maintenance signal is inserted in the first service code stream; the second alarm logic is used for indicating that the first service code stream is in an abnormal state and a maintenance signal has been inserted in the first service code stream; and the third alarm logic is used for indicating that the first service code stream is in a normal state.

8. The method according to claim 7, wherein processing the first service code stream according to the alarm logic to obtain the second service code stream comprises:
in a case where the alarm logic is the first alarm logic, extracting a third service code stream from the first service code stream, and modifying the third service code stream to obtain the second service code stream; and
outputting the second service code stream.

9. The method according to claim 7, wherein processing the first service code stream according to the alarm logic to obtain the second service code stream comprises:
in a case where the alarm logic is the second alarm logic, determining the second service code stream according to the maintenance signal that has been inserted in the first service code stream; and
outputting the second service code stream.

10. The method according to claim 7, wherein processing the first service code stream according to the alarm logic to obtain the second service code stream comprises:
in a case where the alarm logic is the third alarm logic, extracting the third service code stream from the first service code stream, and determining the third service code stream as the second service code stream; and
outputting the second service code stream.

11. A service code stream processing apparatus, comprising:
a second service code stream input unit, configured to input a fourth service code stream;
a second service code stream processing unit, configured to extract a fifth service code stream from the fourth service code stream, and process the fifth service code stream according to second state information of the fifth service code stream; and
a second service code stream output unit, configured to output the processed fifth service code stream.

12. The apparatus according to claim 11, wherein the second state information comprises at least one of the following:
a length of consecutive 0s, a length of consecutive 1s, and a lock state of a 66b synchronous header.

13. The apparatus according to claim 12, wherein the second service code stream processing unit is further configured to:
determine an alarm logic according to the second state information, and process the fifth service code stream according to the alarm logic;
wherein the alarm logic at least comprises one of the following: a fourth alarm logic or a fifth alarm logic;
the fourth alarm logic is used for indicating that the length of consecutive 0s and/or the length of consecutive 1s in the fifth service code stream is greater than or equal to a preset length threshold, or the 66b synchronous header is in a loss of lock; and the fifth alarm logic is used for indicating that the fifth service code stream is in a normal state.

14. The apparatus according to claim 13, wherein the second service code stream processing unit is further configured to:
in a case where the alarm logic is the fourth alarm logic, modify the fifth service code stream.

15. A service code stream processing method, comprising:
obtaining a fourth service code stream, and extracting a fifth service code stream from the fourth service code stream; and
processing the fifth service code stream according to second state information of the fifth service code stream, and outputting the processed fifth service code stream.

16. The method according to claim 15, wherein the second state information comprises at least one of the following:
a length of consecutive 0s, a length of consecutive 1s, and a lock state of a 66b synchronous header.

17. The method according to claim 16, wherein processing the fifth service code stream according to the second state information of the fifth service code stream comprises:
determining an alarm logic according to the second state information, and processing the fifth service code stream according to the alarm logic;
wherein the alarm logic at least comprises one of the following: a fourth alarm logic or a fifth alarm logic;
the fourth alarm logic is used for indicating that the length of consecutive 0s and/or the length of consecutive 1s in the fifth service code stream is greater than or equal to a preset length threshold, or the 66b synchronous header is in a loss of lock; and the fifth alarm logic is used for indicating that the fifth service code stream is in a normal state.

18. The method according to claim 17, wherein processing the fifth service code stream according to the alarm logic comprises:
in a case where the alarm logic is the fourth alarm logic, modifying the fifth service code stream.
